(19) Europäisches Patentamt

European Patent Office

Office européen des brevets

(11) **EP 0 474 285 B1**

(12) **EUROPEAN PATENT SPECIFICATION**

(45) Date of publication and mention
of the grant of the patent:
**08.05.1996   Bulletin 1996/19**

(51) Int Cl.⁶: **H04N 5/44**, H04N 5/14

(21) Application number: **91202169.8**

(22) Date of filing: **26.08.1991**

(54) **Edge direction detector for image processing video systems**

Kantenverlaufsdetektor für Bildverarbeitungsvideosysteme

Détecteur de la direction de flanc pour des systèmes vidéo de traitement d'images

(84) Designated Contracting States:
**DE FR GB IT**

(30) Priority: **03.09.1990 EP 90202327**

(43) Date of publication of application:
**11.03.1992   Bulletin 1992/11**

(73) Proprietor: **Philips Electronics N.V.
5621 BA Eindhoven (NL)**

(72) Inventors:
• **de Haan, Gerard
NL-5656 AA Eindhoven (NL)**
• **de Poortere, Gerrit Frederik Magdalena
NL-5656 AA Eindhoven (NL)**

(74) Representative:
**Kooiman, Josephus Johannes Antonius et al
INTERNATIONAAL OCTROOIBUREAU B.V.,
Prof. Holstlaan 6
NL-5656 AA Eindhoven (NL)**

(56) References cited:
US-A- 4 213 150          US-A- 4 868 655
US-A- 4 985 764

• PATTERN RECOGNITION LETTERS, vol. 5, no. 4,
April 1987, pages 289-292; A. ROSENFELD et al.:
"Direction-weighted line fitting to edge data"

## Description

The present invention relates to video apparatus, and more particularly, to edge direction detectors thereof.

It is well known that artefacts which arise due to an interlaced display standard, namely line-crawl and interline flicker, can be significantly reduced or eliminated by conversion to a progressive scanning scheme. To form such a progressive scan, a line is added, by line repetition or interpolation between each pair of adjacent lines in each field of the interlaced system. A cost effective way of implementing an interpolation is use of a median filter. A median filter will operate well with respect to the step response and performance on noisy images. However, because in some known algorithms only vertical interpolation is used, the median filter creates disturbing serration effects along the edges of moving diagonal transitions. The visibility of this effect depends on e.g. the contrast in the scene and the display characteristics, and is generally quite visible on a twenty inch receiver or monitor. Since the display sizes of larger television sets substantially exceed this dimension, the above-mentioned effects are particularly disturbing.

It was proposed in the article "Progressive Scan Conversion using Edge Information" by T. Doyle and M. Looymans, Proceedings of the Workshop on HDTV, Torino, 1989, sponsored by the European Association for Signal Processing, IEEE, EIC, ITE and SMPTE to reduce the above mentioned effect by detecting the direction in which the edge extends and varying the interpolation algorithm in accordance with the detected direction. A 2 by 3 window in the current field was used and the magnitude of the three pixel differences in three different directions was determined, the smallest of these values being assumed to indicate the direction of the edge. For assumed vertical edges, the median filter, in this reference, then operated on the two selected pixels from the present field, namely the pixels yielding the smallest difference as mentioned above, and the corresponding pixel from the previous field. For other directions, the average value of the pair of pixels yielding the smallest absolute difference was used. A low-pass filter filtering the input video data was added in order to make the direction selection independent of high frequency noise.

While the above-mentioned edge orientation detector with some additional features irrelevant to the present invention resulted in a great reduction of artefacts, its performance in high frequency areas is still subject to improvement.

It is an object of the present invention to improve the performance of the above-described edge detectors in areas that contain high frequency detail. To this end, first and second aspects of the invention are defined in claims 1 and 6. The dependent claims define advantageous embodiments.

It is a further object of the present invention to provide edge detection apparatus which will yield additional possible edge directions in the vicinity of the horizontal axis, since the main artefact of the median filter, serration on moving sloped transitions, is most objectionable in substantially horizontal directions.

The present invention provides an apparatus for approximating the direction of an edge in a video image formed by a video signal constituted by sequential fields and sequential lines in each of the fields. It comprises first means for generating first signals indicative of the difference between the pixel value of each of a group of primary pixels in a line in a present field and the pixel value of respective corresponding slope defining secondary pixels, and means for generating an edge direction signal as a function of said first signals. It is characterized in that said slope defining secondary pixels are pixels in a vertically adjacent line in the field immediately preceding said present field.

The operation and construction of the present invention will now be described with reference to the drawing.

Figure 1 illustrates the algorithm underlying the known edge direction detector;
Figure 2 is a block diagram of a line interpolation system utilizing an edge direction detector;
Figure 3 illustrates the direction calculation algorithm in accordance with the present invention;
Figure 4 is a block diagram of the edge direction detector of the present invention.

To reduce artefacts which arise due to an interlaced display standard, namely line-crawl and interline flicker, conversion to a progressive scanning scheme has been proposed. To form such a progressive scan, a line is added, by line repetition or interpolation between each pair of adjacent lines in each field of the interlaced system, preferably by means of a median filter. However, because in some known algorithms only vertical interpolation is used, the median filter creates disturbing serration effects along the edges of moving diagonal transitions.

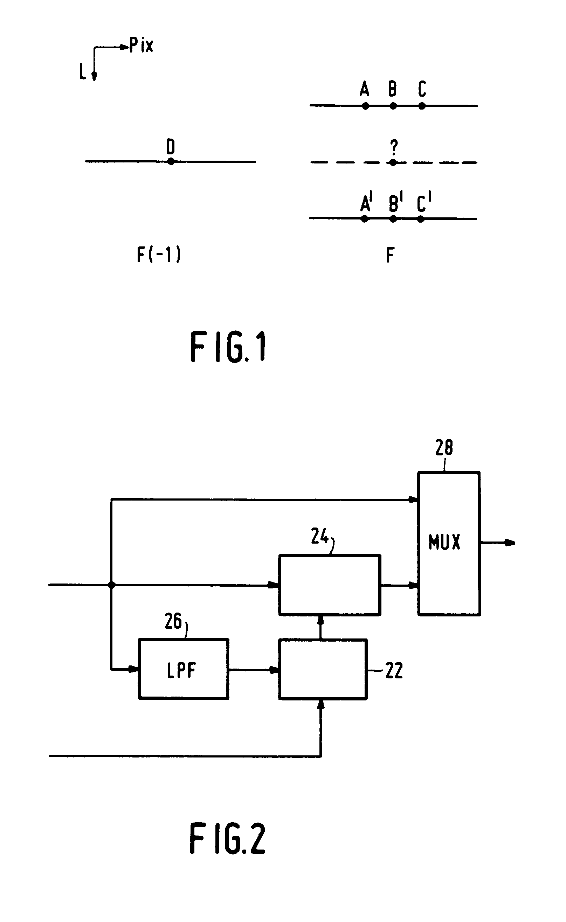

It was proposed in the article "Progressive Scan Conversion using Edge information" by T. Doyle and M. Looymans, Proceedings of the Workshop on HDTV, Torino, 1989, to reduce the above mentioned effect by detecting the direction in which the edge extends and varying the interpolation algorithm in accordance with the detected direction. As illustrated in Figure 1, a 2 by 3 window in the current field was used and the magnitude of the differences A-C', C-A', and B-B' was determined, the smallest of these values being assumed to indicate the direction of the edge. For assumed vertical edges, the median filter, in this reference, then operated on the two selected pixels from the present field, namely the pixels yielding the smallest difference as mentioned above, and the corresponding pixel D from the previous field. For other directions, the average value of the pair of pixels yielding the smallest absolute difference was used. As illustrated in Figure 2, which is a block diagram of the known system and is also derived from the above-mentioned article, a low-pass filter 26 filtering the input video data was added in order to make the direction selection independent of high frequency noise. The incoming video data is applied to an interpolator 24, the direction of interpolation of which is determined by an edge direction detection stage 22. The above-mentioned low pass filter 26 filters the video data prior to its application to stage 22. Finally, the video data and the output of interpolator 24 are multiplexed in a multiplexer 28.

As mentioned previously, the objective of the present invention is to improve the performance of the known detector in areas that contain high vertical frequency detail and to provide an option for increasing the number of directions which can be selected by the direction detector stage.

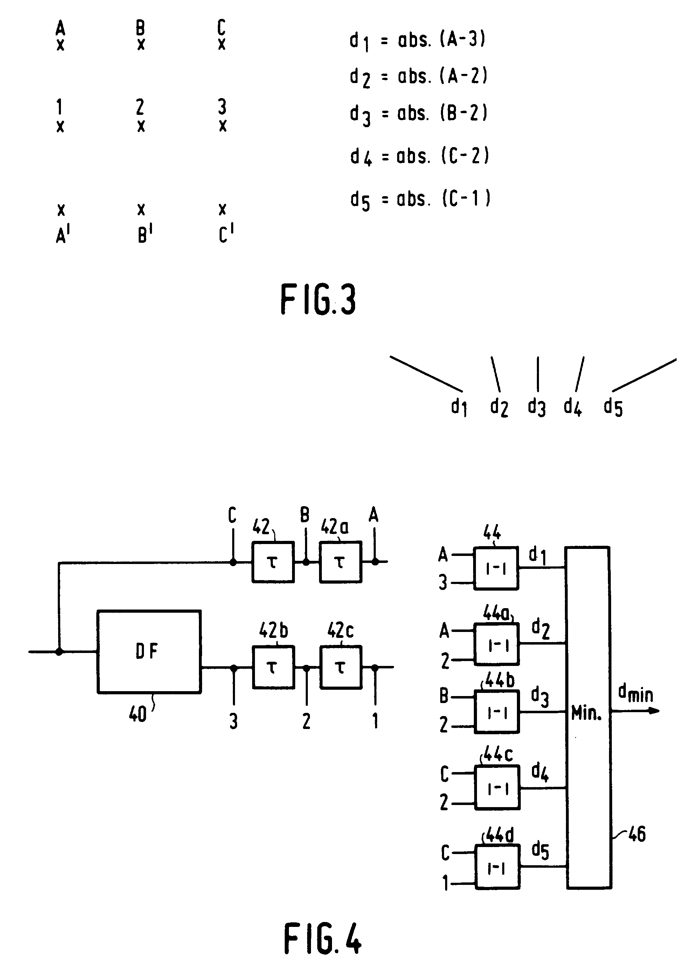

Direction decisions in high frequency areas are more reliable the smaller the distance between the samples determining the differences in accordance with which the gradient is finally chosen. As shown in Fig. 1, in the prior art the values used to determine the differences or gradients in each of the three directions were spaced two frame lines apart vertically. According to the present invention, (Fig. 3), on the other hand, the samples A, B, C in a present field (also called primary pixels herein) are not processed together with the samples A', B', C' (also called secondary pixels herein) also in that field, but instead with samples 1, 2, 3 from the preceding field, which, in an interlaced system, provides a line vertically halfway between the lines having samples A, B, C and A', B', C' respectively. If now the differences listed on the right-hand side of Fig. 3 are considered, it will be noted that d1 and d5 are found in a direction closer to the horizontal than were the most horizontally inclined differences A-C' and C-A' of Fig. 1. Direction d2, based on the absolute difference between pixel A and pixel 2 yields a gradient in the same direction as did A-C', but with only half the length. The immunity to alias in this direction is thus increased by a factor of 2. Similarly, absolute difference d3 is only one half the magnitude of absolute difference B-B', thereby improving its immunity to vertical alias. The same comments apply to differences d4 and d5 as applied to differences d2 and d1, respectively. Thus, directions closer to the horizontal are available and, in every case, the distance over which the differences are obtained is less than in the prior art.

The edge detector is shown in block diagram form in Fig. 4. There, the incoming video signal is delayed in cascade-connected pixel delays 42 and 42a furnishing pixel B and pixel A at their respective outputs. The incoming signal is also delayed by a field delay 40 and additional pixel delays 42b and 42c. As indicated in fig. 4, the output of field delay 40 is pixel 3. Pixel 2 and pixel 1 are found at the respective outputs of delays 42b and 42c. Pixel values derived from the above-described delay structure are applied to substraction stages 44, 44a, etc. according to the table in Fig. 3. Stages 44, etc. compute the absolute difference between signals applied to their inputs. The calculated differences dl etc. are then applied to a comparator arrangement 46 whose output yields the estimated edge direction. This may be the direction associated with the absolute minimum difference, or it may be the result of ranking the differences by absolute value, and using the minimum difference only if intermediate differences are associated with directions between those signified by the minimum and maximum difference values, or other schemes.

It has been found useful to filter the video signal in the vertical direction before the calculation of the edge direction to prevent problems from moving parts of the image. A two tap transversal filter with coefficients 1/2 and 1/2 yields good results. A three tap filter with 1/4, 1/2, 1/4 coefficients is slightly better.

Using motion compensation on the values from the previous field before application to the edge detector also improves the overall operation of the latter.

In a second preferred embodiment also preferably using samples from the previous field, the direction angle is estimated by use of the arctan or arccotan functions. In its simplest form a look-up table is used to find the angle whose tangent is, for example, $\frac{A-B}{A-1}$ using the pixels illustrated in Fig. 3. Since the look-up table can be using the pixels illustrated in Fig. 3. Since the look-up table can be quantized in any manner deemed appropriate, i.e. the total number of direction angles which can be computed can be varied, the distribution can be such as to increase the resolution in certain angular regions, etc., this method is particularly flexible. It will be noted that only three pixel values are required for each edge direction estimate given above. Refinements with use of more pixel values are possible. It was shown experimentally that the ratio $\frac{1-2+A-B}{A-1+B-2}$ more closely approximates the tangent of the angle of intersection of a presumed edge with the horizontal than does the above-mentioned tangent approximation. Mathematically it can be shown that this angle of intersection equals arctan $\frac{A-2}{B-1}$.

**Claims**

1. Apparatus for approximating the direction of an edge in a video image formed by a video signal constituted by sequential fields and sequential lines in each of the fields, the apparatus comprising:

   first means (40-44d) for generating signals (d1-d5) varying in dependence on at least two differences between pixel values of pixels of a group formed by primary pixels (A, B, C) in a given line in a present field and associated secondary pixels (1, 2, 3) in a different line, the secondary pixels (1, 2, 3) having horizontal positions corresponding to horizontal positions of the primary pixels (A, B, C), at least one of these differences being a difference between a pixel value of a primary pixel and a pixel value of a secondary pixel, and

evaluating means (46) coupled to receive said varying signals (d1-d5) for generating an edge direction signal (dmin) in dependence upon the varying signals (d1-d5),

characterized in that said secondary pixels (1, 2, 3) are pixels in a field immediately preceding said present field, whereby said secondary pixels are located on a line which is vertically immediately adjacent to said given line.

2. An apparatus as claimed in Claim 1, wherein said first means (40-44d) comprises means (44-44d) for finding at least the absolute difference between the pixel values of a first selected primary (A) and a first selected secondary pixel (3) constituting a first pixel pair (A, 3) on the one hand, and the absolute difference between a second selected primary (C) and a second selected secondary pixel (1) constituting a second pixel pair (C, 1) on the other hand, the angle to the horizontal determined by said first pixel pair (A, 3) differing from the angel to the horizontal determined by said second pixel pair (C, 1), said absolute differences constituting said first signals.

3. An apparatus as claimed in Claim 2, wherein said primary pixels (A, B, C) form pixel groups each having at least three pixels.

4. An apparatus as claimed in Claim 3, wherein said primary pixels comprise groups each having first (A), second (B) and third (C) pixels and said corresponding secondary pixels comprise first (1), second (2) and third (3) pixels in vertical alignment to said primary pixels (A, B, C),

and wherein said varying signals (d1-d5) comprise a first difference signal (d1) indicative of the absolute difference between the first (A) of the primary pixels (A, B, C) and the third (3) of the secondary pixels (1, 2, 3), a second absolute difference signal (d2) corresponding to the absolute difference between said first (A) of said primary pixels (A, B, C) and said second (2) of said secondary pixels (1, 2, 3), a third absolute difference (d3) between a pair (B, 2) of vertically aligned primary (B) and secondary (2) pixels, a fourth absolute difference (d4) between the third (C) of said primary pixels (A, B, C) and the second (2) of said secondary pixels (1, 2, 3), and a fifth absolute difference (d5) between the third (C) of said primary pixels (A, B, C) and said first (1) of said secondary pixels (1, 2, 3).

5. An apparatus as claimed in Claim 1, characterized in that said first means comprises means for generating tangent signals.

6. An apparatus as claimed in claim 1 characterized in that said first means comprise :

means for generating a first signal varying at least in part in dependence on pixel values of vertically aligned pixels located on vertically immediately adjacent lines respectively belonging to a first field and a field immediately preceding said first field;

means for generating a second signal varying in at least in part in dependence on pixel values of horizontally aligned pixels; and in that said evaluating

means comprise means for combining said first signal and said second signal thereby creating a geometric function signal indicative of said direction of said edge of said television image.

7. An apparatus as claimed in Claim 6, further comprising a look-up table addressed by said geometric function signal for furnishing an angle value indicative of the angle corresponding thereto.

**Patentansprüche**

1. Anordnung zur Annäherung der Richtung einer Kante in einem Video-Bild, das durch ein Video-Signal gebildet wird, das durch aufeinanderfolgende Teilbilder und aufeinanderfolgende Zeilen in jedem der Teilbilder gebildet wird, wobei die Anordnung die nachfolgenden Mittel aufweist:

erste Mittel (40-44d) zum Erzeugen von Signalen (d1 - d5), die variieren, und zwar abhängig von wenigstens zwei Differenzen zwischen Bildelementwerten von Bildelementen einer Gruppe, die durch primäre Bildelemente (A, B, C) gebildet werden in einer bestimmten Zeile in einem aktuellen Teilbild und durch zugeordnete sekundäre Bildelemente (1, 2, 3) in einer anderen Zeile, wobei die sekundären Bildelemente (1, 2, 3) horizontale Positionen haben entsprechend horizontalen Positionen der primären Bildelemente (A, B, C), wobei wenigstens einer dieser Differenzwerte eine Differenz zwischen einem Bildelementwert eines primären Bildelementes und einem Bildelementwert eines sekundären Bildelementes ist, und

Bewertungsmittel (46), die zum Empfangen der genannten variierenden Signale (d1-d5) gekoppelt sind zum Erzeugen eines Kantenrichtungssignals (dmin) abhängig von den variierenden Signale (d1-d5),

dadurch gekennzeichnet, daß die genannten sekundären Bildelemente (1, 2, 3) Bildelemente in einem Teilbild unmittelbar vor dem aktuellen Teilbild sind, wobei die genannten sekundären Bildelemente auf einer Zeile liegen, die vertikal unmittelbar an die genannte bestimmte Zeile grenzt.

2. Anordnung nach Anspruch 1, wobei die genannten ersten Mittel (40-44d) Mittel aufweisen (44-44d) zum Finden wenigstens der absoluten Differenz zwischen den Bildelementwerten des ersten selektierten primären Bildelementes (A) und einem ersten selektierten sekundären Bildelement (3), das ein ersten Bildelementepaar (A,3) bildet einerseits, und der Absolutdifferenz zwischen einem zweiten selektierten primären Bildelement (C) und einem zweiten selektierten sekundären Bildelement (1), das ein zweites Bildelementpaar (C,1) bildet, andererseits, wobei der Winkel mit der Horizontalen, die durch das genannte erste Bildelementepaar (A, 3) gebildet wird, abweicht von dem Winkel mit der Horizontalen, bestimmt durch das genannte zweite Bildelementepaar (C, 1), wobei die genannten Absolutdifferenzen die genannten ersten Signal bilden.

3. Anordnung nach Anspruch 2, wobei die genannten primären Bildelemente (A, B, C) Bildelementgruppen bilden mit je wenigstens drei Bildelementen.

4. Anordnung nach Anspruch 3, wobei die genannten primären Bildelemente Gruppen mit je ersten (A), zweiten, (B) und dritten (C) Bildelementen aufweisen und wobei die entsprechenden sekundären Bildelemente erste (1), zweite (2) und dritte (3) Bildelemente in vertikaler Ausrichtung zu den genannten primären Bildelementen (A, B, C) aufweisen,

wobei die genannten variierenden Signale (d1-d5) ein erstes Differenzsignal (d1) aufweisen, das indikativ ist für die absolute Differenz zwischen den ersten (A) der primären Bildelemente (A, B, C) und den dritten (3) der sekundären Bildelemente (1, 2, 3), wobei ein zweites Absolutdifferenzsignal (d2) der absoluten Differenz zwischen den genannten ersten (A) der primären Bildelemente (A, B, C) und dem genannten zweiten (2) der genannten sekundären Bildelemente (1, 2, 3) entspricht, eine dritte absolute Differenz (d3) zwischen einem Paar (B, 2) vertikal ausgerichteter primärer (B) und sekundärer (2) Bildelemente, eine vierte absolute Differenz (d4) zwischen dem dritten (C) der genannten primären Bildelemente (A, B, C) und der zweiten (2) der genannten sekundären Bildelemente (1, 2, 3), und eine fünfte absolute Differenz (d5) zwischen dem dritten (C) der genannten primären Bildelemente (A, B, C) und den genannten ersten (1) der genannten sekundären Bildelemente (1, 2, 3).

5. Anordnung nach Anspruch 1, dadurch gekennzeichnet, daß die genannten ersten Mittel Mittel aufweisen zum Erzeugen von Tangenten-Signalen.

6. Anordnung nach Anspruch 1, dadurch gekennzeichnet, daß die genannten ersten Mittel die nachfolgenden Elemente aufweisen:

Mittel zum Erzeugen eines ersten Signals, das wenigstens teilweise variiert, und zwar abhängig von Bildelementwerten von vertikal ausgerichteter Bildelementen auf vertikal unmittelbar angrenzenden Zeilen, die zu einem ersten Teilbild bzw. zu einem dem genannten ersten teilbild unmittelbar vorhergehenden Teilbild gehören;
Mittel zum Erzeugen eines zweiten Signals, das wenigstens teilweise abhängig von Bildelementwerten horizontal ausgerichteter Bildelemente variiert; und daß die genannten Bewertungsmittel Mittel aufweisen zum Kombinieren des genannten ersten Signals und des genannten zweiten Signals, wodurch ein geometrisches Funktionssignal erzeugt wird, das indikativ ist für die genannte Richtung der genannten Kante des genannten Fernsehbildes.

7. Anordnung nach Anspruch 6, weiterhin mit einer Tabelle, adressiert durch das genannte geometrische Funktionssignal zum Liefern eines Winkelwertes, der indikativ ist für den dazugehörenden Winkel.

**Revendications**

1. Appareil permettant d'obtenir une valeur approximative de la direction d'un flanc dans une image vidéo formée par un signal vidéo constitué de trames séquentielles et de lignes séquentielles dans chacune des trames, ledit appareil comprenant :

des premiers moyens (40-44d) pour générer des signaux (d1-d5) variants en fonction d'au moins deux différences entre des valeurs des pixels d'un groupe formé de pixels primaires (A, B, C) dans une ligne donnée d'une trame présente et de pixels secondaires associés (1, 2, 3) dans une ligne différente, les pixels secondaires (1, 2, 3) ayant des positions horizontales correspondant à des positions horizontales des pixels primaires (A, B, C), et au moins une de ces différences étant une différence entre une valeur d'un pixel primaire et une valeur d'un pixel secondaire, et

des moyens d'évaluation (46) couplés auxdits signaux variants (d1-d5) pour générer un signal de direction de flanc (dmin) en fonction des signaux variants (d1-d5), caractérisé en ce que lesdits pixels secondaires (1, 2, 3) sont des pixels d'une trame précédant immédiatement la trame présente, de telle sorte que lesdits pixels secondaires soient situés sur une ligne qui verticalement est immédiatement voisine de ladite ligne donnée.

2. Appareil selon la revendication 1, dans lequel lesdits premiers moyens (40-44d) comprennent des moyens (44-44d) pour trouver au moins la différence absolue entre les valeurs d'un premier pixel primaire sélectionné (A) et d'un premier pixel secondaire sélectionné (3) constituant une première paire de pixels (A, 3), d'une part, et la différence absolue entre un deuxième pixel primaire sélectionné (C) et un deuxième pixel secondaire sélectionné (1) constituant une deuxième paire de pixels (C, 1), d'autre part, l'angle avec l'horizontale déterminé par ladite première paire de pixels (A, 3) différant de l'angle avec l'horizontale déterminé par ladite deuxième paire de pixels (C, 1), lesdites différences absolues constituant lesdits premiers signaux.

3. Appareil selon la revendication 2, dans lequel lesdits pixels primaires (A, B, C) forment des groupes de pixels ayant chacun au moins trois pixels.

4. Appareil selon la revendication 3, dans lequel lesdits pixels primaires comprennent des groupes ayant chacun un premier (A), un deuxième (B) et un troisième (C) pixels et lesdits pixels secondaires correspondants comprennent un premier (1), un deuxième (2) et un troisième (3) pixels dans l'alignement vertical avec lesdits pixels primaires (A, B, C),

et dans lequel lesdits signaux variants (d1-d5) comprennent un premier signal de différence (d1) indicatif de la différence absolue entre le premier (A) des pixels primaires (A, B, C) et le troisième (3) des pixels secondaires (1, 2, 3), un deuxième signal de différence absolue (d2) correspondant à la différence absolue entre ledit premier (A) desdits pixels primaires (A, B, C) et ledit deuxième (2) desdits pixels secondaires (1, 2, 3), une troisième différence absolue (d3) entre une paire (B, 2) de pixels primaires (B) et secondaires (2) alignés verticalement, et une quatrième différence absolue (d4) entre le troisième (C) desdits pixels primaires (A, B, C) et le deuxième (2) desdits pixels secondaires (1, 2, 3), et une cinquième différence absolue (d5) entre le troisième (C) desdits pixels primaires (A, B, C) et ledit premier (1) desdits pixels secondaires (1, 2, 3).

5. Appareil selon la revendication 1, caractérisé en ce que ledit premier moyen comprend des moyens pour générer des signaux de tangente.

6. Appareil selon la revendication 1, caractérisé en ce que lesdits premiers moyens comprennent :

des moyens pour générer un premier signal variant au moins en partie en fonction des valeurs de pixels alignés verticalement situés sur des lignes immédiatement voisines verticalement et appartenant respectivement à une première trame et à une trame précédant immédiatement ladite première trame, des moyens pour générer un deuxième signal variant au moins en partie en fonction de valeurs de pixels alignés horizontalement, et en ce que lesdits moyens d'évaluation comprennent des moyens pour combiner ledit premier signal et ledit deuxième signal afin de créer un signal de fonction géométrique indicatif de ladite direction dudit flanc de ladite image de télévision.

7. Appareil selon la revendication 6, comprenant, en outre, une table de consultation adressée par ledit signal de fonction géométrique pour délivrer une valeur d'angle indicative de l'angle qui y correspond.

FIG.1

FIG.2

$$d_1 = abs. (A-3)$$

$$d_2 = abs. (A-2)$$

$$d_3 = abs. (B-2)$$

$$d_4 = abs. (C-2)$$

$$d_5 = abs. (C-1)$$

## FIG.3

## FIG.4